# EUROPEAN PATENT APPLICATION

(11) **EP 4 779 992 A2**
(43) Date of publication of application: **22.07.2026**
(21) Application number: 23956185.5
(22) Date of filing: 19.10.2023
(51) Int. Cl.: H04N 21/422, H04N 5/64, G06F 3/16

(54) **DISPLAY DEVICE AND OPERATION METHOD THEREOF**

(71) Applicant: LG Electronics Inc., Yeongdeungpo-gu Seoul 07336 (KR)
(72) Inventor: JANG, Eun Kwang, Seoul 06772 (KR)
(74) Representative: Vossius & Partner Patentanwälte Rechtsanwälte mbB
(86) International application number: PCT/KR2023/016258
(87) International publication number: WO 2025/084463

(57) **Abstract**

A device according to an embodiment of the present invention comprises: a display; a display housing which encompasses the display and which is formed as a pair of parallel horizontal sides and a pair of parallel vertical sides; a plurality of microphones for acquiring voice data; and a controller, wherein the plurality of microphones includes a first group microphone arranged on the pair of horizontal sides and a second group microphone arranged on the pair of vertical sides, and the controller can determine, on the basis of rotation of the display housing, two or more microphones through which the voice data is to be acquired from among the plurality of microphones.

## Description

### [Technical Field]

The present disclosure relates to a display device.

### [Background Art]

Due to a characteristic of a TV, a user uses the TV while being spaced apart from the TV by a predetermined distance or more. The user may remotely control the TV using a remote control device. Recently, as voice recognition technology has developed, the TV can be more conveniently controlled remotely through voice recognition.

However, in a case where external noise is input together while the user utters a control command, there is a problem in that a voice recognition rate is lowered. Accordingly, there have been attempts to improve the voice recognition rate using a directional microphone and beamforming technology.

Meanwhile, as types of content become diverse and many users want to be provided with content anywhere, a TV supporting a landscape mode and a portrait mode is gaining popularity. Such a TV, unlike a conventional TV used in a fixed manner, is not only rotatable in a horizontal direction and a vertical direction, but also can be used by being rotated in various directions.

However, an arrangement direction of the directional microphone may change according to rotation of the TV. Accordingly, there is a problem in that the voice recognition rate is lowered.

### [Detailed Description]

### [Technical Problem]

The present disclosure is directed to solving a problem in that a voice recognition rate is lowered according to a directing direction of a microphone and rotation of a display.

The present disclosure is directed to solving a problem in that the voice recognition rate is lowered in a case where a distance between the microphone and a voice utterance point becomes far according to the rotation of the display.

### [Technical Solution]

A display device according to an embodiment of the present disclosure includes a display, a display housing configured to enclose the display and formed of a pair of parallel horizontal edges and a pair of parallel vertical edges, a plurality of microphones configured to acquire voice data, and a controller. The plurality of microphones include a first microphone group disposed on the pair of horizontal edges and a second microphone group disposed on the pair of vertical edges, and the controller is configured to determine two or more microphones, among the plurality of microphones, to acquire the voice data based on rotation of the display housing.

The display device according to an embodiment of the present disclosure is configured to acquire an operation mode of the display device including a landscape mode and a portrait mode based on the rotation of the display housing, and the controller is configured to, when the operation mode is acquired as the landscape mode, acquire the voice data through two or more microphones among the first microphone group, and when the operation mode is acquired as the portrait mode, acquire the voice data through two or more microphones among the second microphone group.

According to an embodiment of the present disclosure, the two or more microphones for acquiring the voice data may be microphones located on a single horizontal straight line.

The pair of horizontal edges of the display housing according to an embodiment of the present disclosure include a first horizontal edge and a second horizontal edge facing each other, and the first microphone group includes a 1-1 microphone group disposed on the first horizontal edge and a 1-2 microphone group disposed on the second horizontal edge. The controller is configured to, when the operation mode is acquired as the portrait mode, acquire the voice data through any one microphone among the 1-1 microphone group and a microphone located on a single horizontal straight line with said any one microphone among the 1-2 microphone group.

The display device according to an embodiment of the present disclosure is configured to, in a case where the display housing rotates within a preset y-axis rotation range, acquire the voice data through two or more microphones among the second microphone group.

The preset y-axis rotation range according to an embodiment of the present disclosure may include 90°.

The pair of vertical edges of the display housing according to an embodiment of the present disclosure include a first vertical edge and a second vertical edge facing each other, the second microphone group includes a 2-1 microphone group disposed on the first vertical edge and a 2-2 microphone group disposed on the second vertical edge, and the controller is configured to, when the display housing rotates within a preset x-axis rotation range, acquire the voice data through two or more microphones among the 2-2 microphone group.

In the display device according to an embodiment of the present disclosure, the horizontal edges include a first horizontal edge and a second horizontal edge facing each other, and the first microphone group includes a 1-1 microphone group disposed on the first horizontal edge and a 1-2 microphone group disposed on the second horizontal edge. The controller is configured to, in a case where the display housing rotates within a preset x-axis range, acquire the voice data through two or more microphones among the 1-2 microphone group.

The display device according to an embodiment of the present disclosure is configured to acquire the voice data through two or more microphones, among the plurality of microphones, that protrude furthest forward from the display housing according to the rotation of the display housing.

The display device according to an embodiment of the present disclosure is configured to determine the two or more microphones for acquiring the voice data by further considering at least one of a sound mode of the display device and a volume of a speaker.

### [Advantageous Effects of Invention]

According to an embodiment of the present disclosure, even in a case where the display is rotated, a directing direction of the microphone is maintained, so that a success rate of remote control using a voice command can be maximized.

According to an embodiment of the present disclosure, even in a case where the display is rotated, voice data is acquired through a microphone closest to a voice utterance point, so that the success rate of remote control using the voice command can be maximized.

### [Brief Description of Drawings]

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device according to an embodiment of the present disclosure.
FIG. 4 shows an example of using a remote control device according to an embodiment of the present disclosure.
FIGS. 5A and 5B are diagrams for explaining a landscape mode and a portrait mode of a stand-type display device according to an embodiment of the present disclosure.
FIGS. 6A and 6B are diagrams for explaining an arrangement of speakers and microphones of a display device.
FIG. 7 is a diagram for explaining an arrangement of microphones of a display device according to an embodiment of the present disclosure.
FIGS. 8A and 8B are diagrams for explaining an operation in which a display device acquires voice data in a landscape mode or a portrait mode according to an embodiment of the present disclosure.
FIG. 9 is a diagram for explaining an operation of a display device in a case where a display housing has a default posture according to an embodiment of the present disclosure.
FIG. 10 is a diagram for explaining an operation of a display device in a case where a display housing is rotated about a y-axis according to an embodiment of the present disclosure.
FIG. 11 is a diagram for explaining an operation of a display device in a case where a display housing is rotated about an x-axis according to an embodiment of the present disclosure.
FIG. 12 is a diagram for explaining an operation of a display device in a case where a display housing is rotated about a y-axis according to an embodiment of the present disclosure.
FIG. 13 is a diagram for explaining an operation of a display device in a case where a display housing is rotated about a y-axis and an x-axis according to an embodiment of the present disclosure.
FIG. 14 is a diagram for explaining an operation of a display device in a case where a display housing is rotated about a z-axis according to an embodiment of the present disclosure.
FIG. 15 is a diagram for explaining an operation of a display device in a case where a display housing is rotated about a y-axis and an x-axis according to an embodiment of the present disclosure.

### [Best Mode for Carrying Out the Invention]

Hereinafter, embodiments related to the present invention will be described in more detail with reference to the drawings. The suffixes "module" and "unit" for components used in the following description are given or used interchangeably only in consideration of the ease of writing the specification, and do not themselves have distinct meanings or roles from each other.

A display device according to an embodiment of the present invention is, for example, an intelligent display device in which a computer support function is added to a broadcast reception function. While being faithful to the broadcast reception function, an Internet function and the like are added, so that the display device may be equipped with a more convenient interface such as a handwriting-type input device, a touch screen, or a spatial remote control. Further, the display device is connected to the Internet and a computer by supporting a wired or wireless Internet function, and thus can perform functions such as e-mail, web browsing, banking, or games. A standardized general-purpose OS may be used for such various functions.

Accordingly, since various applications can be freely added or deleted on a general-purpose OS kernel, for example, the display device described in the present invention can perform various user-friendly functions. More specifically, the display device may be, for example, a network TV, an HBBTV, a smart TV, an LED TV, an OLED TV, or the like, and may also be applied to a smartphone in some cases.

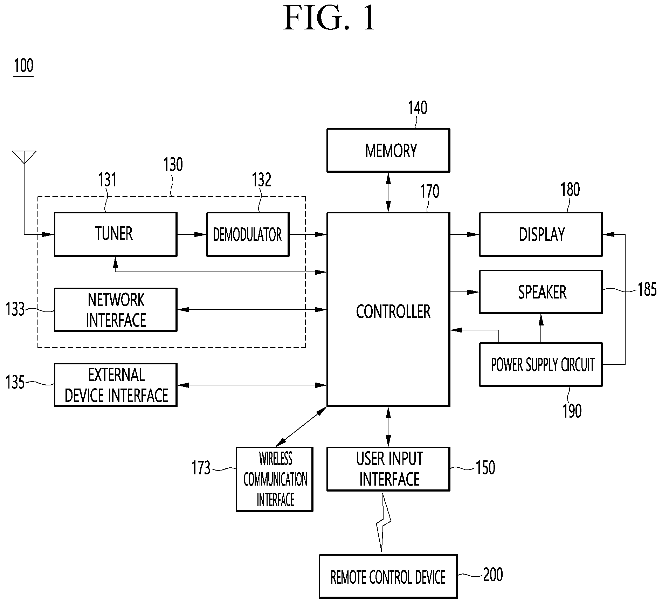

FIG. 1 is a block diagram illustrating a configuration of a display device according to an embodiment of the present invention.

Referring to FIG. 1, a display device 100 may include a broadcast receiving unit 130, an external device interface 135, a memory 140, a user input interface 150, a controller 170, a wireless communication interface 173, a display 180, a speaker 185, and a power supply circuit 190.

The broadcast receiving unit 130 may include a tuner 131, a demodulator 132, and a network interface 133.

The tuner 131 may tune to a specific broadcast channel according to a channel selection command. The tuner 131 may receive a broadcast signal for the tuned specific broadcast channel.

The demodulator 132 may separate the received broadcast signal into a video signal, an audio signal, and a data signal related to a broadcast program, and may restore the separated video signal, audio signal, and data signal into an outputtable form.

The external device interface 135 may receive an application or an application list in an adjacent external device and deliver the same to the controller 170 or the memory 140.

The external device interface 135 may provide a connection path between the display device 100 and an external device. The external device interface 135 may receive at least one of an image and audio output from an external device connected to the display device 100 wirelessly or by wire, and deliver the same to the controller 170. The external device interface 135 may include a plurality of external input terminals. The plurality of external input terminals may include an RGB terminal, one or more HDMI (High Definition Multimedia Interface) terminals, and a component terminal.

An image signal of an external device input through the external device interface 135 may be output through the display 180. An audio signal of the external device input through the external device interface 135 may be output through the speaker 185.

External devices connectable to the external device interface 135 may be any one of a set-top box, a Blu-ray player, a DVD player, a game machine, a sound bar, a smartphone, a PC, a USB memory, and a home theater, but these are merely examples.

The network interface 133 may provide an interface for connecting the display device 100 to a wired/wireless network including the Internet. The network interface 133 may transmit or receive data to or from other users or other electronic devices through a connected network or another network linked to the connected network.

In addition, some content data stored in the display device 100 may be transmitted to a selected user or a selected electronic device among other users or other electronic devices pre-registered in the display device 100.

The network interface 133 may access a predetermined web page through a connected network or another network linked to the connected network. That is, it may access a predetermined web page through a network to transmit or receive data to or from a corresponding server.

And, the network interface 133 may receive content or data provided by a content provider or a network operator. That is, the network interface 133 may receive content such as movies, advertisements, games, VOD, and broadcast signals and related information provided from a content provider or a network provider through a network.

In addition, the network interface 133 may receive update information and update files of firmware provided by a network operator, and may transmit data to the Internet, a content provider, or a network operator.

The network interface 133 may select and receive a desired application among applications opened to the public through a network.

The memory 140 may store programs for each signal processing and control in the controller 170, and store signal-processed image, audio, or data signals.

In addition, the memory 140 may perform a function for temporary storage of an image, audio, or data signal input from the external device interface 135 or the network interface 133, and may store information regarding a predetermined image through a channel memory function.

The memory 140 may store an application or an application list input from the external device interface 135 or the network interface 133.

The display device 100 may reproduce a content file (a video file, a still image file, a music file, a document file, an application file, etc.) stored in the memory 140 and provide the same to a user.

The user input interface 150 may deliver a signal input by a user to the controller 170, or deliver a signal from the controller 170 to the user. For example, the user input interface 150 may receive and process a control signal, such as power on/off, channel selection, and screen setting, from the remote control device 200 according to various communication schemes such as Bluetooth, Ultra Wideband (UWB), ZigBee, Radio Frequency (RF) communication, or Infrared (IR) communication, or may process a control signal from the controller 170 to be transmitted to the remote control device 200.

Further, the user input interface 150 may deliver a control signal input from local keys (not shown) such as a power key, a channel key, a volume key, and a setting value to the controller 170.

An image signal image-processed by the controller 170 may be input to the display 180 and displayed as an image corresponding to the image signal. Further, an image signal image-processed by the controller 170 may be input to an external output device through the external device interface 135.

An audio signal processed by the controller 170 may be audio-output to the speaker 185. Further, an audio signal processed by the controller 170 may be input to an external output device through the external device interface 135.

In addition, the controller 170 may control the overall operation within the display device 100.

Further, the controller 170 may control the display device 100 according to a user command input through the user input interface 150 or an internal program, and may access a network to allow a user to download a desired application or an application list into the display device 100.

The controller 170 allows channel information and the like selected by the user to be output through the display 180 or the speaker 185 together with the processed image or audio signal.

Further, the controller 170 allows an image signal or an audio signal from an external device, for example, a camera or a camcorder, input through the external device interface 135, to be output through the display 180 or the speaker 185 according to an external device image reproduction command received through the user input interface 150.

Meanwhile, the controller 170 may control the display 180 to display an image. For example, the controller 170 may control a broadcast image input through the tuner 131, an external input image input through the external device interface 135, an image input through the network interface, or an image stored in the memory 140 to be displayed on the display 180. In this case, the image displayed on the display 180 may be a still image or a moving image, and may be a 2D image or a 3D image.

Further, the controller 170 may control content stored in the display device 100, received broadcast content, or external input content input from the outside to be reproduced. The content may be in various forms such as a broadcast image, an external input image, an audio file, a still image, an accessed web screen, and a document file.

The wireless communication interface 173 may perform communication with an external device through wired or wireless communication. The wireless communication interface 173 may perform short-range communication with an external device. To this end, the wireless communication interface 173 may support short-range communication using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. Such a wireless communication interface 173 may support wireless communication between the display device 100 and a wireless communication system, between the display device 100 and another display device 100, or between the display device 100 and a network where the display device 100 (or an external server) is located, through a Wireless Area Network. The Wireless Area Network may be a Wireless Personal Area Network.

Here, the another display device 100 may be a mobile terminal such as a smartphone or a wearable device (e.g., a smartwatch, smart glasses, a head mounted display (HMD)) capable of exchanging data with (or interworking with) the display device 100 according to the present invention. The wireless communication interface 173 may sense (or recognize) a communicable wearable device around the display device 100.

Furthermore, in a case where the sensed wearable device is a device authenticated to communicate with the display device 100 according to the present invention, the controller 170 may transmit at least a part of data processed in the display device 100 to the wearable device through the wireless communication interface 173. Accordingly, a user of the wearable device can use data processed in the display device 100 through the wearable device.

The display 180 may generate a driving signal by converting an image signal, a data signal, an OSD signal, etc., processed by the controller 170, or an image signal, a data signal, etc., received from the external device interface 135, into R, G, and B signals, respectively.

Meanwhile, since the display device 100 shown in FIG. 1 is merely an embodiment of the present invention, some of the illustrated components may be integrated, added, or omitted according to specifications of the display device 100 that is actually implemented.

That is, two or more components may be combined into one component, or one component may be subdivided into two or more components, as necessary. Further, functions performed in each block are for explaining embodiments of the present invention, and specific operations or devices thereof do not limit the scope of the present invention.

According to another embodiment of the present invention, unlike shown in FIG. 1, the display device 100 may receive and reproduce an image through the network interface 133 or the external device interface 135 without including the tuner 131 and the demodulator 132.

For example, the display device 100 may be implemented by being separated into an image processing device such as a set-top box for receiving broadcast signals or contents according to various network services and a content reproduction device for reproducing the content input from the image processing device.

In this case, a method for operating a display device according to an embodiment of the present invention to be described below may be performed by any one of the display device 100 as described with reference to FIG. 1, the separated image processing device such as a set-top box, or the content reproduction device including the display 180 and the audio output unit 185.

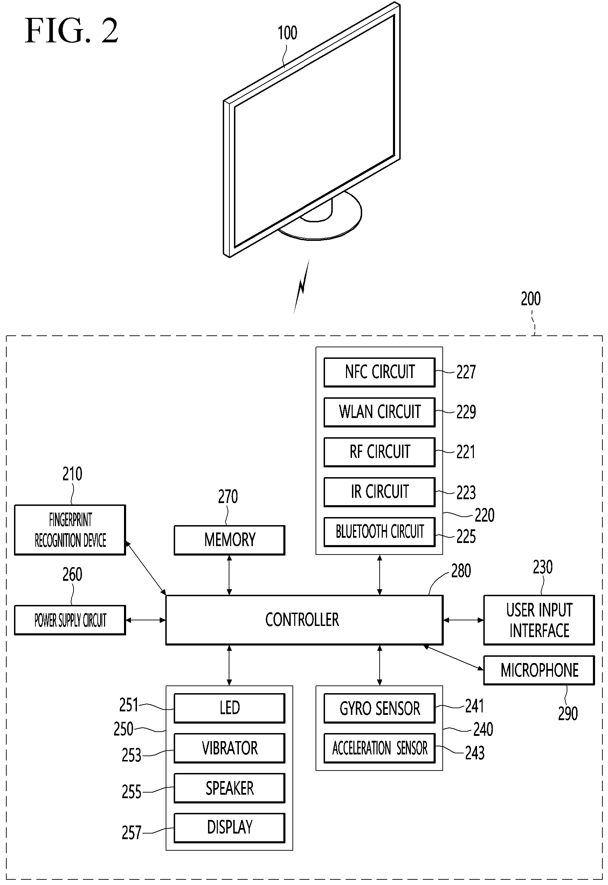

Next, a remote control device according to an embodiment of the present invention will be described with reference to FIGS. 2 to 3.

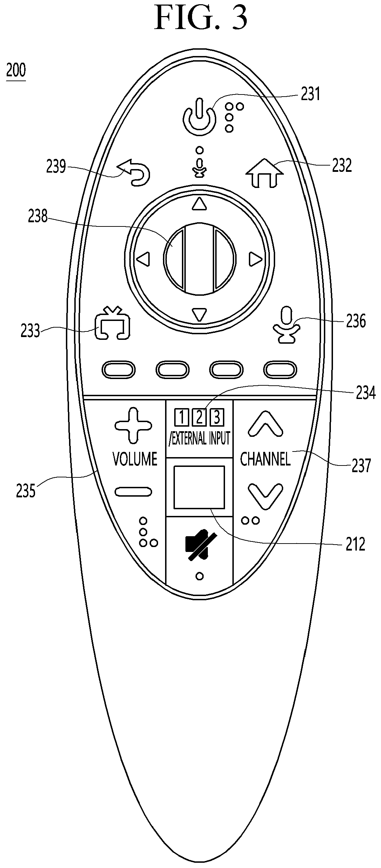

FIG. 2 is a block diagram of a remote control device according to an embodiment of the present invention, and FIG. 3 shows an example of an actual configuration of a remote control device 200 according to an embodiment of the present invention.

First, referring to FIG. 2, the remote control device 200 may include a fingerprint recognizer 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 transmits and receives a signal to and from any one of the display devices according to the embodiments of the present invention described above.

The remote control device 200 may include an RF circuit 221 capable of transmitting and receiving a signal to and from the display device 100 according to an RF communication standard, and may include an IR circuit 223 capable of transmitting and receiving a signal to and from the display device 100 according to an IR communication standard. In addition, the remote control device 200 may include a Bluetooth circuit 225 capable of transmitting and receiving a signal to and from the display device 100 according to a Bluetooth communication standard. In addition, the remote control device 200 may include an NFC circuit 227 capable of transmitting and receiving a signal to and from the display device 100 according to a Near Field Communication (NFC) communication standard, and may include a WLAN circuit 229 capable of transmitting and receiving a signal to and from the display device 100 according to a Wireless LAN (WLAN) communication standard.

In addition, the remote control device 200 transmits a signal containing information on a movement of the remote control device 200 and the like to the display device 100 through the wireless communication circuit 220.

Meanwhile, the remote control device 200 may receive a signal transmitted by the display device 100 through the RF circuit 221, and if necessary, may transmit a command related to power on/off, channel change, volume change, and the like to the display device 100 through the IR circuit 223.

The user input interface 230 may be configured with a keypad, a button, a touch pad, a touch screen, or the like. A user may input a command related to the display device 100 to the remote control device 200 by manipulating the user input interface 230. In a case where the user input interface 230 includes a hard key button, the user may input the command related to the display device 100 to the remote control device 200 through a push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, a confirm button 238, and a back button 239.

The fingerprint recognition button 212 may be a button for recognizing a user's fingerprint. As an embodiment, the fingerprint recognition button 212 is capable of a push operation, and thus may receive the push operation and a fingerprint recognition operation.

The power button 231 may be a button for turning on/off power of the display device 100.

The home button 232 may be a button for moving to a home screen of the display device 100.

The live button 233 may be a button for displaying a real-time broadcast program.

The external input button 234 may be a button for receiving an external input connected to the display device 100.

The volume control button 235 may be a button for controlling a volume size output by the display device 100.

The voice recognition button 236 may be a button for receiving a user's voice and recognizing the received voice.

The channel change button 237 may be a button for receiving a broadcast signal of a specific broadcast channel.

The confirm button 238 may be a button for selecting a specific function, and the back button 239 may be a button for returning to a previous screen.

FIG. 2 will be described again.

In a case where the user input interface 230 includes a touch screen, the user may touch a soft key of the touch screen to input a command related to the display device 100 to the remote control device 200. In addition, the user input interface 230 may include various types of input means that can be manipulated by the user, such as a scroll key or a jog key, and the present embodiment does not limit the scope of the present invention.

The sensor 240 may include a gyro sensor 241 or an acceleration sensor 243, and the gyro sensor 241 may sense information on the movement of the remote control device 200.

For example, the gyro sensor 241 may sense information on an operation of the remote control device 200 based on x, y, and z axes, and the acceleration sensor 243 may sense information on a moving speed and the like of the remote control device 200. Meanwhile, the remote control device 200 may further include a distance measurement sensor, thereby sensing a distance to the display 180 of the display device 100.

The output interface 250 may output an image or audio signal corresponding to manipulation of the user input interface 230 or corresponding to a signal transmitted from the display device 100.

The user can recognize whether the user input interface 230 is manipulated or whether the display device 100 is controlled through the output interface 250.

For example, the output interface 250 may include an LED 251 that lights up when the user input interface 230 is manipulated or when a signal is transmitted and received to and from the display device 100 through the wireless communication unit 225, a vibrator 253 that generates vibration, a speaker 255 that outputs sound, or a display 257 that outputs an image.

In addition, the power supply circuit 260 supplies power to the remote control device 200, and reduces power waste by stopping power supply when the remote control device 200 has not moved for a predetermined time.

The power supply circuit 260 may resume power supply when a predetermined key provided in the remote control device 200 is manipulated.

The memory 270 may store various types of programs, application data, and the like necessary for control or operation of the remote control device 200.

In a case where the remote control device 200 wirelessly transmits and receives a signal to and from the display device 100 through the RF circuit 221, the remote control device 200 and the display device 100 transmit and receive the signal through a predetermined frequency band.

The controller 280 of the remote control device 200 may store information on a frequency band capable of wirelessly transmitting and receiving a signal to and from the paired display device 100 in the memory 270 and refer to the stored information.

The controller 280 controls overall matters related to control of the remote control device 200. The controller 280 may transmit a signal corresponding to a predetermined key manipulation of the user input interface 230 or a signal corresponding to the movement of the remote control device 200 sensed by the sensor 240 to the display device 100 through the wireless communication unit 225.

In addition, the microphone 290 of the remote control device 200 may acquire voice.

A plurality of microphones 290 may be provided.

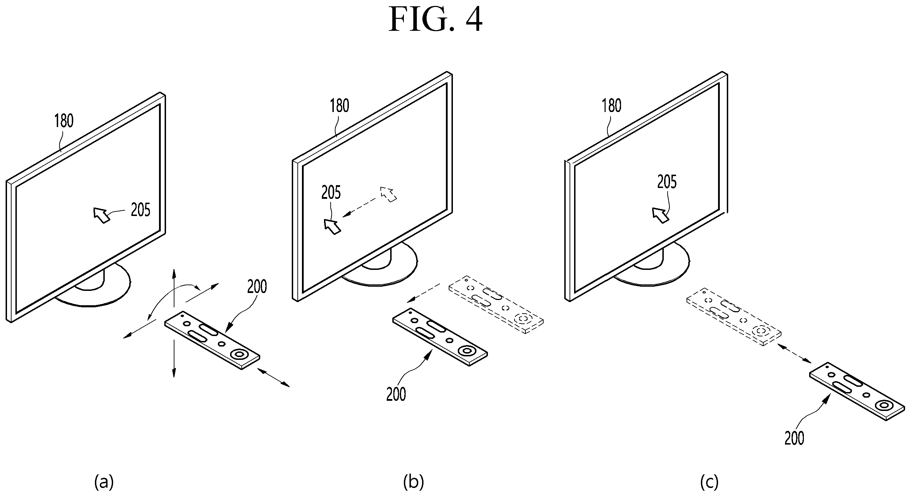

Next, FIG. 4 will be described.

FIG. 4 shows an example of utilizing a remote control device according to an embodiment of the present invention.

(a) of FIG. 4 illustrates that a pointer 205 corresponding to the remote control device 200 is displayed on the display 180.

A user may move or rotate the remote control device 200 up and down, left and right. The pointer 205 displayed on the display 180 of the display device 100 corresponds to the movement of the remote control device 200. Such a remote control device 200 may be named a spatial remote control because the corresponding pointer 205 is moved and displayed according to a movement in a 3D space, as shown in the drawing.

(b) of FIG. 4 illustrates that when the user moves the remote control device 200 to the left, the pointer 205 displayed on the display 180 of the display device 100 also moves to the left in correspondence thereto.

Information on the movement of the remote control device 200 sensed through the sensor of the remote control device 200 is transmitted to the display device 100. The display device 100 may calculate coordinates of the pointer 205 from the information on the movement of the remote control device 200. The display device 100 may display the pointer 205 to correspond to the calculated coordinates.

(c) of FIG. 4 illustrates a case where the user moves the remote control device 200 away from the display 180 in a state where a specific button in the remote control device 200 is pressed. Thereby, a selection area in the display 180 corresponding to the pointer 205 may be zoomed in and displayed in an enlarged manner.

Conversely, in a case where the user moves the remote control device 200 closer to the display 180, the selection area in the display 180 corresponding to the pointer 205 may be zoomed out and displayed in a reduced manner.

Meanwhile, in a case where the remote control device 200 moves away from the display 180, the selection area may be zoomed out, and in a case where the remote control device 200 moves closer to the display 180, the selection area may be zoomed in.

Further, in a state where the specific button in the remote control device 200 is pressed, recognition of up, down, left, and right movements may be excluded. That is, when the remote control device 200 moves away from or approaches the display 180, up, down, left, and right movements are not recognized, and only forward and backward movements may be recognized. In a state where the specific button in the remote control device 200 is not pressed, only the pointer 205 moves according to the up, down, left, and right movements of the remote control device 200.

Meanwhile, a moving speed or a moving direction of the pointer 205 may correspond to a moving speed or a moving direction of the remote control device 200.

Meanwhile, a pointer in the present specification refers to an object displayed on the display 180 in correspondence to the operation of the remote control device 200. Therefore, as the pointer 205, objects of various shapes other than the arrow shape shown in the drawings are possible. For example, it may be a concept including a point, a cursor, a prompt, a thick outline, and the like. And, it is also possible that the pointer 205 is displayed corresponding to a plurality of points such as a line or a surface, as well as corresponding to any one point among a horizontal axis and a vertical axis on the display 180.

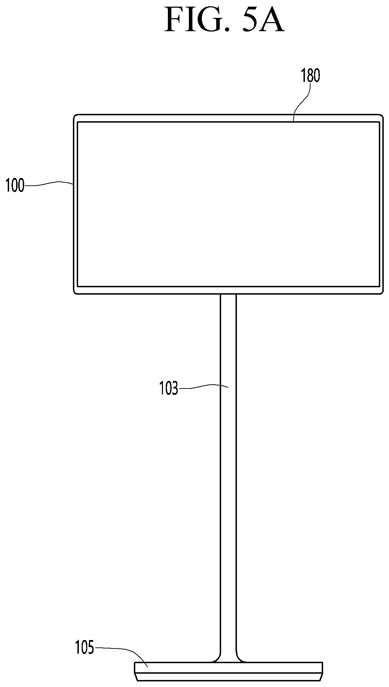

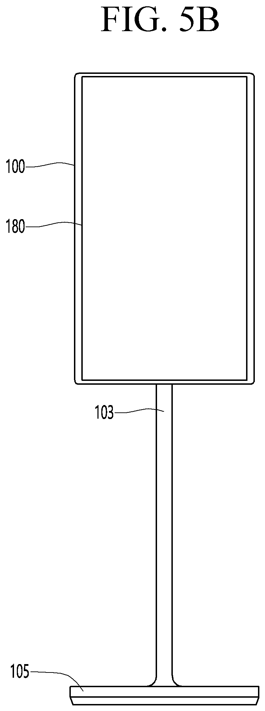

FIGS. 5A and 5B are diagrams for explaining a landscape mode and a portrait mode of a stand-type display device according to an embodiment of the present disclosure.

Referring to FIGS. 5A and 5B, a stand-type display device 100 is illustrated.

A shaft 103 and a stand base 105 may be connected to the display device 100.

The shaft 103 may connect the display device 100 and the stand base 105. The shaft 103 may extend vertically.

A lower end of the shaft 103 may be connected to an edge portion of the stand base 105.

The lower end of the shaft 103 may be rotatably connected to a peripheral portion of the stand base 105.

The display device 100 and the shaft 103 may rotate about a vertical axis with respect to the stand base 105.

An upper portion of the shaft 103 may be connected to a rear surface of the display device 100.

The stand base 105 may serve to support the display device 100.

The display device 100 may be configured to include the shaft 103 and the stand base 105.

The display device 100 may rotate about a point where the upper portion of the shaft 103 and a rear surface of the display 180 abut each other.

FIG. 5A illustrates operating in the landscape mode having a posture in which a horizontal length of the display 180 is greater than a vertical length, and FIG. 5B may illustrate operating in the portrait mode having a posture in which the vertical length of the display 180 is greater than the horizontal length.

The user may carry and move the stand-type display device. That is, the stand-type display device has improved mobility unlike a fixed device, so that the user is not restricted by an arrangement location.

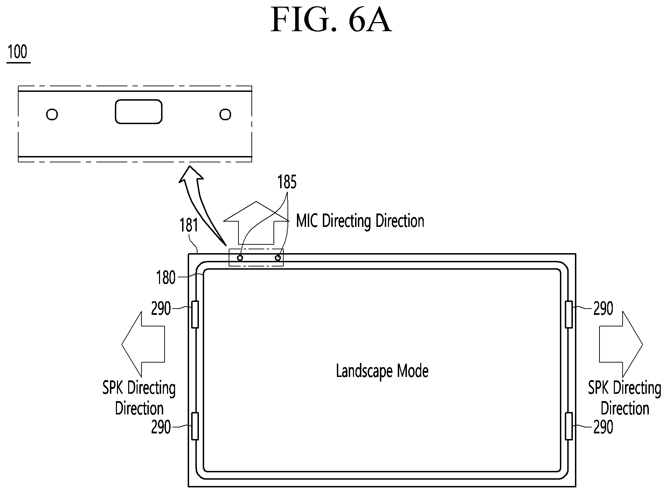

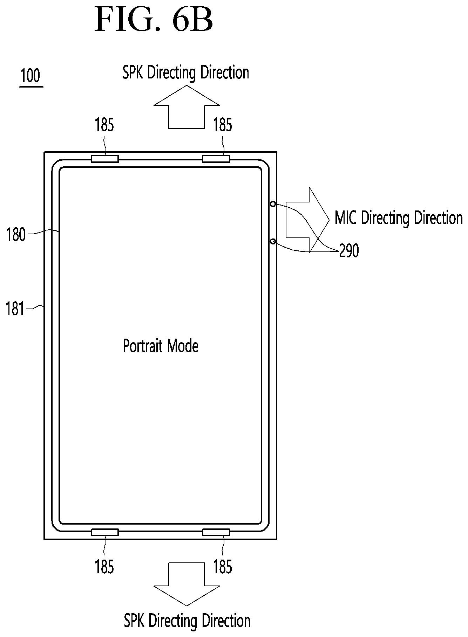

FIGS. 6A and 6B are diagrams for explaining an arrangement of a speaker and a microphone of a display device.

The display device 100 may include a display housing 181, the speaker 185, and the microphone 290.

The display housing 181 may be formed to cover remaining surfaces of a display 180 except for a front surface thereof to protect the display 180. That is, the display housing 181 may be configured to enclose the display 180.

The speaker 185 and the microphone 290 may be disposed on the display housing 181.

Referring to FIG. 6A, the speaker 185 may be a directional speaker having a directing direction in a vertical direction. A plurality of speakers 185 may be disposed in the vertical direction in a landscape mode.

In addition, the microphone 290 may be a directional microphone having a directing direction in a horizontal direction. A plurality of microphones 290 may be disposed in the horizontal direction in the landscape mode.

The controller 170 may acquire voice data through the plurality of microphones 290 disposed in the horizontal direction. However, the voice data may include noise in addition to a user's voice. In order to accurately recognize the user's voice, the controller 170 may process the noise acquired through the microphone 290 using beamforming technology in a pre-processing step. The controller 170 may form a beam in the horizontal direction through the plurality of microphones 290 disposed in the horizontal direction, and may recognize a voice command input from a long distance through technical processing such as removing the noise or focusing on the user's voice.

Meanwhile, referring to FIG. 6B, the display housing 181 may operate in a portrait mode by rotating in a y-axis direction. The plurality of microphones 290 may be disposed in the vertical direction in the portrait mode. Accordingly, since the beam required for the technical processing such as noise removal is formed in the vertical direction, a performance problem such as a decrease in voice recognition rate may occur.

Accordingly, the present disclosure is directed to providing the display device 100 in which the voice recognition rate is maintained at a predetermined level or higher regardless of the landscape mode or the portrait mode. That is, the present disclosure is directed to providing the display device 100 in which the voice recognition rate is maintained at a predetermined level or higher regardless of the y-axis rotation of the display housing 181.

Meanwhile, the display 180 of the stand-type display device 100 may rotate or tilt in various directions such as an x-axis or a z-axis as well as the y-axis. Accordingly, the user can adjust a posture of the display housing 181 to an angle convenient for viewing content. Depending on a rotation direction and a rotation angle of the display housing 181, an angle between the user uttering the voice command and the microphone 290 may change.

Accordingly, the present disclosure is directed to providing the display device 100 in which the voice recognition rate is maintained at a predetermined level or higher regardless of the rotation direction or the rotation angle of the display housing 181.

To this end, the microphone 290 of the display device 100 according to an embodiment of the present disclosure may be disposed not only on a front surface of the display device 100 but also on a side surface thereof.

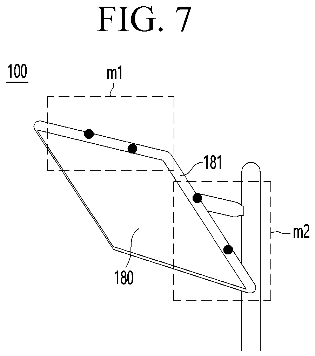

FIG. 7 is a diagram for explaining an arrangement of microphones of a display device according to an embodiment of the present disclosure.

The display device 100 may include a first microphone group (m1) disposed on the front surface of the display device 100 and a second microphone group (m2) disposed on the side surface of the display device 100.

The first microphone group (m1) may include a plurality of microphones disposed in a horizontal direction when the display 180 is in a landscape mode. That is, the first microphone group (m1) may include a plurality of microphones disposed in a vertical direction when the display device 100 is in a portrait mode.

The second microphone group (m2) may include a plurality of microphones disposed in the vertical direction when the display device 100 is in the landscape mode. That is, the second microphone group (m2) may include a plurality of microphones disposed in the horizontal direction when the display device 100 is in the portrait mode.

The display device 100 according to an embodiment of the present disclosure may determine a microphone to acquire voice data among the first microphone group (m1) and the second microphone group (m2) based on whether the display device 100 is in the landscape mode or the portrait mode.

Next, a method in which the display device 100 according to an embodiment of the present disclosure determines the microphone to acquire the voice data among the first microphone group (m1) and the second microphone group (m2) will be described.

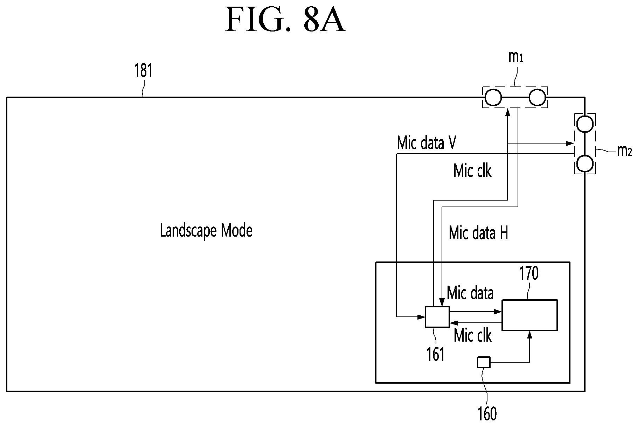

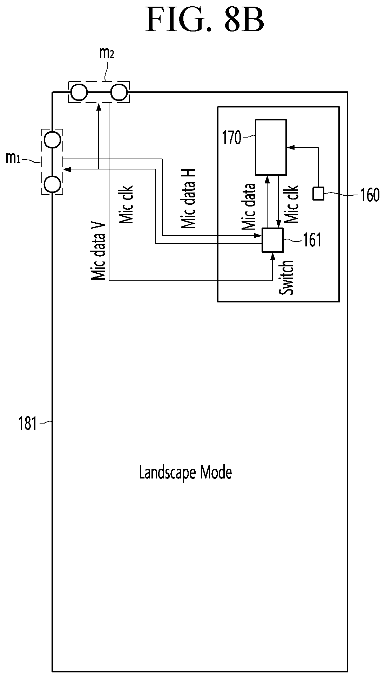

FIGS. 8A and 8B are diagrams for explaining an operation in which a display device acquires voice data in a landscape mode or a portrait mode according to an embodiment of the present disclosure.

The display device 100 may include a sensor 160, a controller 170, a switch 161, the first microphone group (m1), and the second microphone group (m2).

The sensor 160 may sense at least one of a rotation direction and a rotation angle of the display housing 181 or the display 180. The sensor 160 may be a gyro sensor or an acceleration sensor.

The rotation direction and the rotation angle of the display housing 181 and the display 180 may be the same. Hereinafter, the rotation direction and the rotation angle of the display housing 181 and the display 180 may be used interchangeably.

The controller 170 may acquire an operation mode of the display device 100 based on at least one of the rotation direction and the rotation angle of the display housing 181 sensed by the sensor 160. The operation mode may include the landscape mode and the portrait mode. Further, the controller 170 may switch the operation mode of the display device 100 to one of the landscape mode and the portrait mode based on at least one of the rotation direction and the rotation angle of the display housing 181. The controller 170 may select the microphone 290 to acquire the voice data based on the operation mode of the display device 100. The controller 170 may be implemented in a form of a System on Chip (SoC).

The switch 161 may be a switch for selecting the microphone 290 to acquire the voice data. The controller 170 may control the switch 161 based on the operation mode of the display 180. The controller 170 may control the switch 161 based on at least one of the rotation direction and the rotation angle of the display housing 181.

The controller 170 may acquire the operation mode of the display device 100 as the landscape mode or the portrait mode based on a y-axis rotation angle of the display housing 181.

When the controller 170 senses that the y-axis rotation angle of the display housing 181 is 0°, the controller 170 may acquire the operation mode of the display device 100 as the landscape mode. When the operation mode of the display device 100 is acquired as the landscape mode, the controller 170 may control the switch 161 to be connected to the first microphone group (m1) disposed in the horizontal direction in the landscape mode.

When the controller 170 senses that the y-axis rotation angle of the display housing 181 is 90° in a clockwise or counterclockwise direction, the controller 170 may acquire the operation mode of the display device 100 as the portrait mode. When the operation mode of the display device 100 is acquired as the portrait mode, the controller 170 may control the switch 161 to be connected to the second microphone group (m2) disposed in the horizontal direction in the portrait mode.

Accordingly, the controller 170 may acquire the voice data in the horizontal direction to form a horizontal beam not only when the display device 100 is in the landscape mode but also when the display device 100 is in the portrait mode. Accordingly, a voice recognition rate using the microphone 290 having a horizontal directing direction can be maximized.

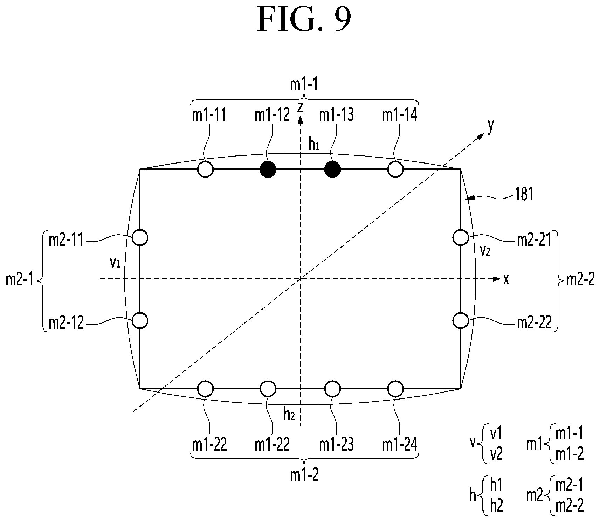

Next, an operation of the display device 100 according to various rotation directions and rotation angles of the present disclosure will be described with reference to FIGS. 9 to 14.

FIGS. 9 to 14 are diagrams simply illustrating a state in which the plurality of microphones 290 are disposed on the display housing 181 of the display device 100 according to an embodiment of the present disclosure.

First, an operation of the display device 100 in a case where the display housing 181 has a default posture will be described with reference to FIG. 9.

FIG. 9 is a diagram for explaining an operation of the display device in a case where the display housing has the default posture according to an embodiment of the present disclosure.

That the display housing 181 has the default posture may mean that rotation angles of an x-axis, a y-axis, and a z-axis of the display housing 181 are all 0°. Since the y-axis rotation angle of the display housing 181 is 0°, the display device 100 may operate in a landscape mode.

The display device 100 according to an embodiment of the present disclosure may include the display housing 181, the first microphone group (m1), and the second microphone group (m2). The display housing 181 may be formed of a pair of parallel horizontal edges (h) and a pair of parallel vertical edges (v). The pair of horizontal edges (h) may be edges located in a horizontal direction when the display device 100 operates in the landscape mode. In addition, the pair of vertical edges (v) may be edges located in a vertical direction when the display device 100 operates in the landscape mode.

The first microphone group (m1) may be a plurality of microphones 290 disposed on the pair of horizontal edges (h). The second microphone group (m2) may be a plurality of microphones 290 disposed on the pair of vertical edges (v).

The pair of horizontal edges may include a first horizontal edge (h1) and a second horizontal edge (h2) facing each other. The first microphone group (m1) may include a 1-1 microphone group (m1-1) disposed on the first horizontal edge (h1) and a 1-2 microphone group (m1-2) disposed on the second horizontal edge (h2).

The 1-1 microphone group may include 1-11 to 1-14 microphones (m1-11, m1-12, m1-13, m1-14) sequentially disposed from a leftmost side of the first horizontal edge (h1) when viewed from a front of the display housing 181. In addition, the 1-2 microphone group (m1-2) may include 1-21 to 1-24 microphones (m1-21, m1-22, m1-23, m1-24) sequentially disposed from a leftmost side of the second horizontal edge (h2) when viewed from the front of the display housing 181.

The pair of vertical edges (v) may include a first vertical edge (v1) and a second vertical edge (v2) facing each other. The second microphone group (m2) may include a 2-1 microphone group (m2-1) disposed on the first vertical edge (v1) and a 2-2 microphone group (m2-2) disposed on the second vertical edge (v2).

The 2-1 microphone group may include 2-11 to 2-14 microphones (m2-11, m2-12, m2-13, m2-14) sequentially disposed from an uppermost side of the first vertical edge (v1) when viewed from the front of the display housing 181. In addition, the 2-2 microphone group (m2-2) may include 2-21 to 2-24 microphones (m2-21, m2-22, m2-23, m2-24) sequentially disposed from an uppermost side of the second vertical edge (v2) when viewed from the front of the display housing 181.

However, the number of microphones 290 disposed on each of the first horizontal edge (h1), the second horizontal edge (h2), the first vertical edge (v1), and the second vertical edge (v2) may vary. Two or more microphones 290 may be disposed on at least one of the first horizontal edge (h1) and the second horizontal edge (h2), and two or more microphones 290 may be disposed on at least one of the first vertical edge (v1) and the second vertical edge (v2).

In a case where the display housing 181 has the default posture, the controller 170 may acquire voice data through the 1-12 microphone (m1-12) and the 1-13 microphone (m1-13).

The 1-1 microphone group (m1-1) may be microphones 290 basically disposed on the display housing 181. That is, the controller 170 may be optimized for processing the voice data acquired through the 1-1 microphone group (m1-1).

In addition, it is assumed that a user is located at a center in front of the display housing 181. A point assumed to be a location of the user may be a point assumed to be a voice utterance point. Hereinafter, the point assumed to be the voice utterance point may be referred to as the voice utterance point. As a distance between the voice utterance point and the microphone 290 is shorter, a voice recognition rate may be higher.

The 1-12 microphone (m1-12) and the 1-13 microphone (m1-13) are disposed at a center of the first horizontal edge (h1), and thus may be the microphones 290 located closest to the voice utterance point among the 1-11 to 1-14 microphones (m1-11, m1-12, m1-13, m1-14) of the 1-1 microphone group (m1-1).

Accordingly, the controller 170 can maximize the voice recognition rate by acquiring and processing the voice data through the 1-12 microphone (m1-12) and the 1-13 microphone (m1-13).

However, the microphones 290 through which the controller 170 acquires the voice data when the display housing 181 has the default posture are not limited to the 1-12 microphone (m1-12) and the 1-13 microphone (m1-13). The controller 170 may acquire the voice data through two or more microphones 290 located on a single horizontal straight line when the display housing 181 has the default posture.

Meanwhile, the controller 170 may determine the microphone 290 to acquire the voice data based on rotation of the display housing 181. Specifically, the controller 170 may determine two or more microphones 290 to acquire the voice data based on at least one of a rotation direction and a rotation angle of the display housing 181.

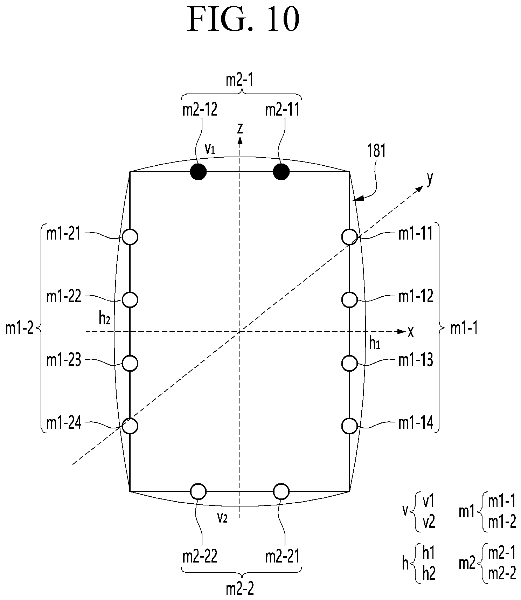

FIG. 10 is a diagram for explaining an operation of the display device in a case where the display housing is rotated about a y-axis according to an embodiment of the present disclosure.

The controller 170 may determine the microphone 290 to acquire the voice data based on the y-axis rotation of the display housing 181.

In a case where the display housing 181 rotates within a preset y-axis rotation range, the controller 170 may acquire the voice data through two or more microphones among the second microphone group (m2).

The preset y-axis rotation range may be a rotation range in which the display device 100 operates in a portrait mode. The preset y-axis rotation range may be a range including 90° in a clockwise or counterclockwise direction about the y-axis. For example, the preset y-axis rotation range may be 45° to 134° in the clockwise direction about the y-axis.

That is, when the operation mode of the display device 100 is acquired as the portrait mode, the controller 170 may acquire the voice data through two or more microphones 290 among the second microphone group (m2).

The two or more microphones 290 acquiring the voice may be the microphones 290 located on a single horizontal straight line. In addition, the two or more microphones 290 acquiring the voice may be the microphones 290 disposed on the same edge. For example, the controller 170 may acquire the voice data through the 2-11 microphone (m2-11) and the 2-12 microphone (m2-12) disposed on the first vertical edge (v1).

Conversely, when the operation mode of the display device 100 is acquired as the landscape mode, the controller 170 may acquire the voice data through two or more microphones 290 among the first microphone group (m1).

In addition, the display device 100 according to an embodiment of the present disclosure may determine the microphone 290 to acquire the voice data based on at least one of various rotation directions and rotation angles of the display housing 181.

Further, the display device 100 according to an embodiment of the present disclosure may determine the microphone 290 to acquire the voice data in consideration of a distance between the voice utterance point and a point where each of the plurality of microphones 290 is located.

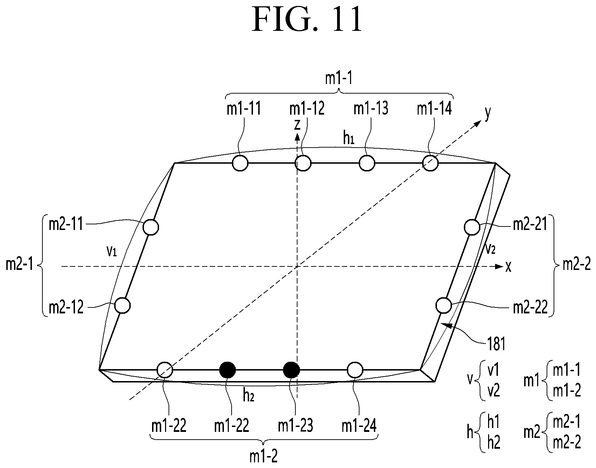

FIG. 11 is a diagram for explaining an operation of the display device in a case where the display housing is rotated about an x-axis according to an embodiment of the present disclosure.

The controller 170 may determine the microphone 290 to acquire the voice data based on the x-axis rotation of the display housing 181.

When the display housing 181 rotates within a preset x-axis rotation range, the controller 170 may acquire the voice data through two or more microphones 290 located closest to the voice utterance point according to the x-axis rotation.

The microphone 290 located closest to the voice utterance point may be the microphone 290 protruding furthest forward from the display housing 181.

The preset x-axis rotation range may be a range in which the display housing 181 is rotated to have a posture in which the second horizontal edge (h2) protrudes further forward from the display housing 181 than the first horizontal edge (h1). For example, the preset x-axis rotation range may be 1° to 179° in a clockwise direction about the x-axis.

As the display housing 181 rotates within the preset x-axis rotation range, the 1-2 microphone group (m1-2) may protrude further forward from the display housing 181 than the 1-1 microphone group (m1-1). Accordingly, the 1-2 microphone group (m1-2) may be closer to the voice utterance point than the 1-1 microphone group (m1-1).

Therefore, the controller 170 may acquire the voice data through two or more microphones 290 among the 1-2 microphone group (m1-2). For example, the controller 170 may acquire the voice data through the 1-22 microphone (m1-22) and the 1-23 microphone (m1-23).

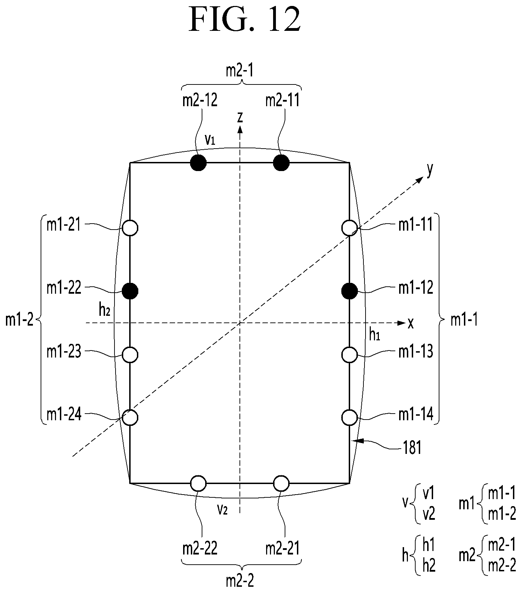

FIG. 12 is a diagram for explaining an operation of the display device in a case where the display housing is rotated about a y-axis according to an embodiment of the present disclosure.

When the operation mode of the display device 100 is acquired as a portrait mode, the controller 170 may acquire the voice data through any one microphone among the 1-1 microphone group (m1-1) and another microphone located on a single horizontal straight line with said any one microphone among the 1-2 microphone group (m1-2).

For example, when the operation mode of the display device 100 is acquired as the portrait mode, the controller 170 may acquire the voice data through the 1-21 microphone (m1-21) and the 1-22 microphone (m1-22).

Compared to the embodiment of FIG. 10, it can be seen that a gap between the microphones 290 acquiring the voice data is different. In addition, compared to the embodiment of FIG. 10, it can be seen that a distance between a point where the microphones 290 acquiring the voice data are located and the ground is different.

Accordingly, the display device 100 according to an embodiment of the present disclosure may acquire the voice data in consideration of various factors such as a beamforming interval or noise reflected from the ground, as well as the rotation of the display housing 181. Accordingly, the voice recognition rate can be maximized.

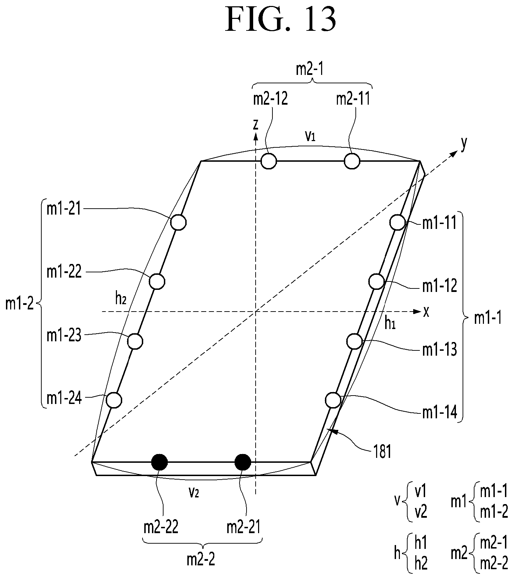

FIG. 13 is a diagram for explaining an operation of the display device in a case where the display housing is rotated about a y-axis and an x-axis according to an embodiment of the present disclosure.

The controller 170 may determine the microphone 290 to acquire the voice data based on the y-axis and x-axis rotation of the display housing 181.

The display housing 181 may have a posture rotated about the y-axis and the x-axis. For example, the display housing 181 may have a posture rotated by 90° about the y-axis to operate in the portrait mode and simultaneously rotated about the x-axis.

The display housing 181 may rotate within a preset x-axis rotation range. The preset x-axis rotation range may be a range in which the display housing 181 is rotated to have a posture in which the second vertical edge (v2) protrudes further forward from the display housing 181 than the first vertical edge (v1). The preset x-axis rotation range may be the same range as the preset x-axis rotation range of FIG. 11, but is not limited thereto.

As the display housing 181 rotates within the preset x-axis rotation range, the 2-2 microphone group (m2-2) may protrude further forward from the display housing 181 than the 2-1 microphone group (m2-1). Accordingly, the 2-2 microphone group (m2-2) may be closer to the voice utterance point than the 2-1 microphone group (m2-1).

Therefore, the controller 170 may acquire the voice data through two or more microphones 290 among the 2-2 microphone group (m2-2). For example, the controller 170 may acquire the voice data through the 2-22 microphone (m2-22) and the 2-23 microphone (m2-23).

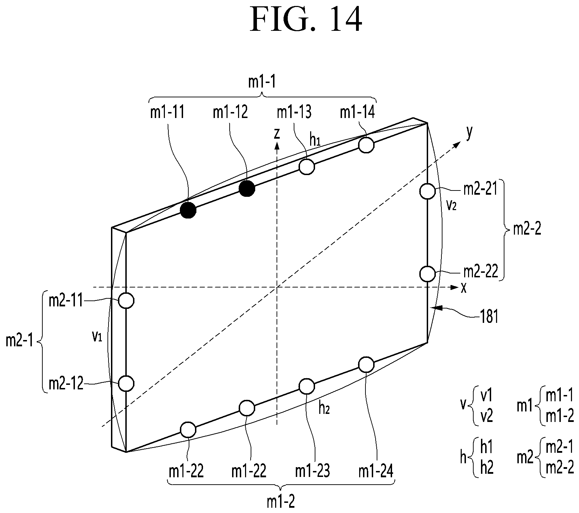

FIG. 14 is a diagram for explaining an operation of the display device in a case where the display housing is rotated about a z-axis according to an embodiment of the present disclosure.

The controller 170 may determine the microphone 290 to acquire the voice data based on the z-axis rotation of the display housing 181.

The controller 170 may acquire the voice data through two or more microphones 290 located closest to the voice utterance point according to the z-axis rotation of the display housing 181. That is, the controller 170 may acquire the voice data through two or more microphones 290 protruding furthest forward from the display housing 181 according to the z-axis rotation of the display housing 181.

When the display device 100 operates in the landscape mode, as the display housing 181 rotates in a counterclockwise direction about the z-axis, microphones 290 disposed on a left side of the display housing 181 may protrude further forward from the display housing 181 than microphones 290 disposed on a right side of the display housing 181.

For example, as the display device 100 rotates in the counterclockwise direction about the z-axis, the 1-11 microphone (m1-11) and the 1-12 microphone (m1-12) may protrude further forward from the display housing 181 than the 1-13 microphone (m1-13) and the 1-14 microphone (m1-14). Therefore, the controller 170 may acquire the voice data through the 1-11 microphone (m1-11) and the 1-12 microphone (m1-12).

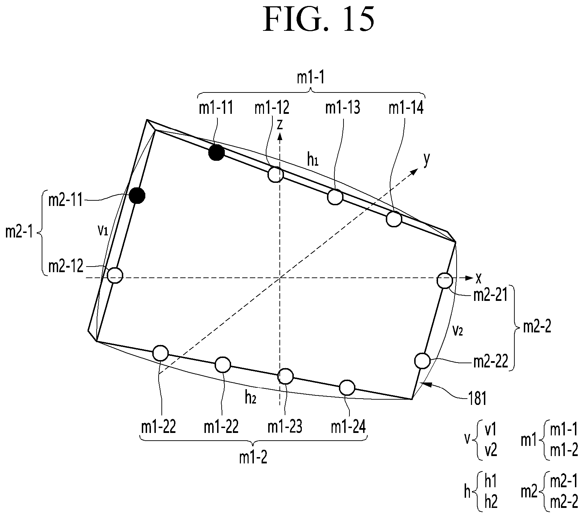

FIG. 15 is a diagram for explaining an operation of the display device in a case where the display housing is rotated about the y-axis and the x-axis according to an embodiment of the present disclosure.

The controller 170 may determine the microphone 290 to acquire the voice data based on the y-axis and x-axis rotation of the display housing 181.

Compared to FIG. 13, a y-axis rotation angle is 90° in FIG. 13, and a y-axis rotation angle in FIG. 15 may be an angle different from 90°. Accordingly, the display housing 181 may have a posture rotated in a direction non-parallel to the x-axis, y-axis, and z-axis.

For example, the display housing 181 may have a posture in which a vertex formed by the first horizontal edge (h1) and the first vertical edge (v1) protrudes further forward than a vertex formed by the second horizontal edge (h2) and the second vertical edge (v2).

Accordingly, among the plurality of microphones 290, the 1-11 microphone (m1-11) and the 2-11 microphone (m2-11) may be the microphones 290 protruding furthest forward from the display housing 181. That is, among the plurality of microphones 290, the 1-11 microphone (m1-11) and the 2-11 microphone (m2-11) may be the microphones 290 closest to the voice utterance point. Therefore, the controller 170 may acquire the voice data through the 1-11 microphone (m1-11) and the 2-11 microphone (m2-11).

Summarizing FIGS. 9 to 14, the display device 100 according to an embodiment of the present disclosure may determine two or more microphones to acquire the voice data among the plurality of microphones 290 based on the rotation of the display housing 181.

Further, the two or more microphones 290 acquiring the voice data according to an embodiment of the present disclosure may be microphones 290 located on a single horizontal straight line in the horizontal direction. Accordingly, horizontal beamforming is facilitated, so that the voice recognition rate can be maximized.

Alternatively, the two or more microphones 290 acquiring the voice data according to an embodiment of the present disclosure may be microphones protruding furthest forward from the display housing 181 according to the rotation of the display housing 181. They may be the microphones of the display housing 181 closest to the voice utterance point. Therefore, the display device 100 according to an embodiment of the present disclosure may maximize the voice recognition rate by acquiring the voice data through the microphones 290 closest to the voice utterance point.

Meanwhile, according to an embodiment, the display device 100 may determine the two or more microphones 290 to acquire the voice data by further considering at least one of a sound mode and a sound volume.

For example, as described above in FIG. 11, the display device 100 according to an embodiment of the present disclosure may acquire the voice data through two or more microphones 290 among the 1-2 microphone group (m1-2) under the landscape mode.

However, when the sound mode is acquired as a bass mode, the controller 170 may acquire the voice data through two or more microphones 290 included in the 1-1 microphone group (m1-1). That is, when the sound mode is acquired as the bass mode, the controller 170 may acquire the voice data through a pair of microphones located at a highest height from the ground among a plurality of pairs of microphones disposed in the horizontal direction.

In addition, when the volume of the speaker is equal to or greater than a preset volume, the controller 170 may acquire the voice data through a pair of microphones located at the highest height among the plurality of pairs of microphones disposed in the horizontal direction.

This is because the sound output from the speaker 185 may be reflected by the ground according to the sound mode or the speaker volume, thereby interfering with voice recognition through the microphone 290 close to the ground.

According to an embodiment of the present invention, the above-described method can be implemented as a processor-readable code on a medium in which a program is recorded. Examples of the processor-readable medium include a ROM, a RAM, a CD-ROM, a magnetic tape, a floppy disk, and an optical data storage device.

The display device described above is not limitedly applicable to the configuration and method of the above-described embodiments, but the embodiments may be configured by selectively combining all or some of the respective embodiments so that various modifications can be made.

## Claims

1. A display device, comprising:
a display;
a display housing configured to enclose the display and formed of a pair of parallel horizontal edges and a pair of parallel vertical edges;
a plurality of microphones configured to acquire voice data; and
a controller,
wherein the plurality of microphones include a first microphone group disposed on the pair of horizontal edges and a second microphone group disposed on the pair of vertical edges, and
wherein the controller is configured to determine two or more microphones, among the plurality of microphones, to acquire the voice data based on rotation of the display housing.

2. The display device of claim 1,
wherein the controller is configured to acquire an operation mode of the display device including a landscape mode and a portrait mode based on the rotation of the display housing, and
wherein the controller is configured to, when the operation mode is acquired as the landscape mode, acquire the voice data through two or more microphones among the first microphone group, and when the operation mode is acquired as the portrait mode, acquire the voice data through two or more microphones among the second microphone group.

3. The display device of claim 2,
wherein the two or more microphones are located on a single horizontal straight line.

4. The display device of claim 2,
wherein the pair of horizontal edges include a first horizontal edge and a second horizontal edge facing each other,
wherein the first microphone group includes a 1-1 microphone group disposed on the first horizontal edge and a 1-2 microphone group disposed on the second horizontal edge, and
wherein the controller is configured to, when the operation mode is acquired as the portrait mode, acquire the voice data through any one microphone among the 1-1 microphone group and a microphone located on a single horizontal straight line with said any one microphone among the 1-2 microphone group.

5. The display device of claim 1,
wherein the controller is configured to, in a case where the display housing rotates within a preset y-axis rotation range, acquire the voice data through two or more microphones among the second microphone group.

6. The display device of claim 5,
wherein the preset y-axis rotation range includes 90°.

7. The display device of claim 5,
wherein the pair of vertical edges include a first vertical edge and a second vertical edge facing each other,
wherein the second microphone group includes a 2-1 microphone group disposed on the first vertical edge and a 2-2 microphone group disposed on the second vertical edge, and
wherein the controller is configured to, when the display housing rotates within a preset x-axis rotation range, acquire the voice data through two or more microphones among the 2-2 microphone group.

8. The display device of claim 1,
wherein the horizontal edges include a first horizontal edge and a second horizontal edge facing each other,
wherein the first microphone group includes a 1-1 microphone group disposed on the first horizontal edge and a 1-2 microphone group disposed on the second horizontal edge, and
wherein the controller is configured to, in a case where the display housing rotates within a preset x-axis range, acquire the voice data through two or more microphones among the 1-2 microphone group.

9. The display device of claim 1,
wherein the controller is configured to acquire the voice data through two or more microphones, among the plurality of microphones, that protrude furthest forward from the display housing according to the rotation of the display housing.

10. The display device of claim 1,
wherein the controller is configured to determine the two or more microphones for acquiring the voice data by further considering at least one of a sound mode of the display device and a volume of a speaker.
